# EUROPEAN PATENT APPLICATION

(11) **EP 3 674 028 A1**
(43) Date of publication of application: **01.07.2020**
(21) Application number: 18248141.6
(22) Date of filing: 28.12.2018
(51) Int. Cl.: B23K 15/00, B23K 26/28, F16B 25/00, F16B 35/00, B23K 26/32, B23K 101/20, B23K 103/18

(54) **WELDING METHOD FOR MANUFACTURING A BI-COMPOSITIONAL SCREW**

(71) Applicant: Taiwan Shan Yin International Co., Ltd., Kaohsiung City 806 (TW)
(72) Inventor: Su, Kou-Tsair, 806 Kaohsiung City (TW); Su, Chen-Long, 800 Kaohsiung City (TW)
(74) Representative: Cabinet Chaillot

(57) **Abstract**

A welding method (3) for manufacturing a bi-compositional screw (4B) includes a preparing operation (31), a welding operation (32) and a forming operation (33). The preparing operation (31) prepares two raw blanks made of different materials and respectively processed to provide a front section (41) and a rear section (42) . The welding operation (32) places the two sections (41, 42) on a positioning device (6) to allow the two sections (41, 42) to meet closely at a joint (C2) along an axis (R), and then applies a welding device (5) to weld the two sections (41,42) at the joint (C2) in a circumferential direction when the two sections (41,42) are rotated in the same rotational direction, thereby attaining a bi-compositional blank (4A) without causing waste extruded out of the joint (C2). The forming operation (33) forms a plurality of threads (41) on the bi-compositional blank (4A) to form a bi-compositional screw (4B). The method (3) prevents the generation of air and pores inside the joint (C2) after welding, reduces processing costs, and ensures preferable processing quality.

## Description

### BACKGROUND OF THIS INVENTION

### 1. Field of this invention

This invention relates to a welding method and relates particularly to a welding method for manufacturing a bi-compositional screw.

### 2. Description of the Related Art

A bi-compositional screw is made through welding two raw blanks which are provided with different materials into a bi-compositional blank and processing the bi-compositional blank to form a bi-compositional screw afterward. Generally, two materials of the bi-compositional blank are processed into a head portion and a drilling portion of the bi-compositional screw respectively. The drilling portion is usually made of a material with the higher strength in order to allow the drilling portion to screw into an object which is provided with larger hardness such as an iron plate effectively. On the other hand, the head portion is usually made of an antirust material such as stainless steel because the head portion is exposed to the air after the screwing operation is finished. Hence, the bi-compositional screw is provided with the antirust effect and the higher strength to attain a preferable screwing action.

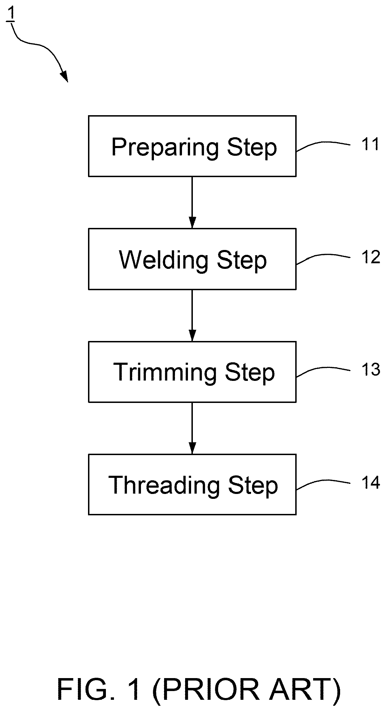

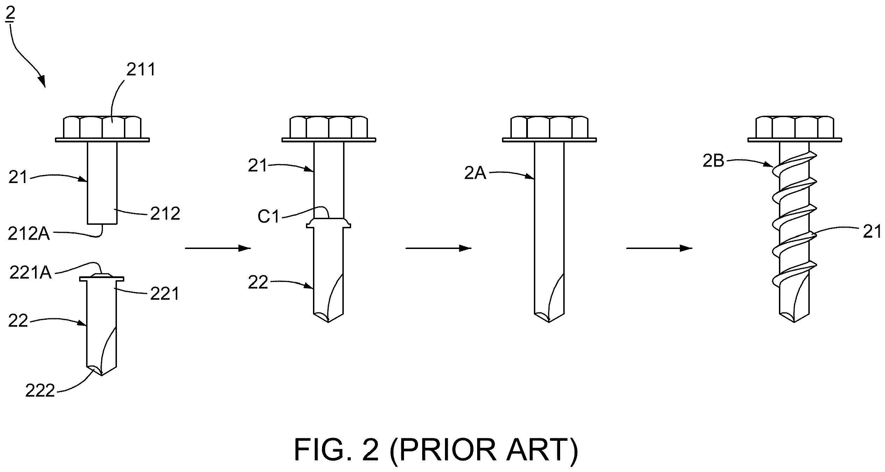

Referring to Fig. **1** and Fig. **2**, a conventional welding method **1** for manufacturing a bi-compositional screw **2B** includes a preparing operation **11,** a welding operation **12,** a trimming operation **13,** and a threading operation **14.** The preparing operation **11** prepares two raw blanks **2** which are made of different materials and processes the two raw blanks **2** into a front section **21** and a rear section **22** respectively to provide the front section **21** and the rear section **22.** The front section **21** further has a head **211** formed on an end of the front section **21** and a front end **212** formed on another end of the front section **21** opposite to the head **211** and defining a front welding surface **212A.** The rear section **22** has a rear end **221** defining a rear welding surface **221A** which faces the front welding surface **212A** and a drill end **222** in opposition to the rear end **221.** After that, the welding operation **12** restricts the head **211** and moves the rear section **22** toward a direction of the front section **21** to contact the front welding surface **212A** with the rear welding surface **221A** closely to form a joint **C1,** and thence rubs the front welding surface **212A** against the rear welding surface **221A** to increase the temperature of the joint **C1,** thereby melting the joint **C1** caused by frictional heat to combine the front and rear sections **21,22** into a bi-compositional blank **2A.** Afterward the trimming operation **13** removes unnecessary waste extruded out of the joint **C1** where the front and rear welding surfaces **212A,221A** meet to provide a smooth peripheral face of the bi-compositional blank **2A.** Finally, the threading operation **14** rolls a plurality of threads **21** on the bi-compositional blank **2A** to form a bi-compositional screw **2B.**

The conventional welding method **1** is executed by the front welding surface **212A** against the rear welding surface **221A** in order to integrate the front and rear sections **21,22** into the bi-compositional blank **2A.** However, the rubbing procedure will cause the generation of air and pores inside the joint **C1** to result in the reduced strength and quality of the bi-compositional blank **2A.** Meanwhile, the rubbing procedure will cause that part of the front end **212** and the rear end **221** are pressed to form waste extruded outwards of the joint **C1.** The waste is carbide formed under a high temperature. Therefore, the waste needs to be softened before removing by a trimming device (not shown) in the trimming operation **13,** or it will wear the trimming device. Thus, the processing costs are increased and additional procedures are required. Further, the processing difficulty is also increased and that requires to be improved.

### SUMMARY OF THIS INVENTION

The object of this invention is to provide a welding method for manufacturing a bi-compositional screw capable of reducing waste, ensuring preferable processing quality and decreasing processing costs.

The welding method of this invention includes a preparing operation, a welding operation and a forming operation. The preparing operation prepares two raw blanks made of different materials, then processes the raw blanks into a front section and a rear section respectively. The front section has a head, a shank extending outwards from the head, and a front end connected to the shank in opposition to the head and defining a front welding surface. The rear section has a rear end defining a rear welding surface which faces the front welding surface and a drill end opposite to the rear end. An outer diameter of the front end is equal to an outer diameter of the rear end. The welding operation equips a welding device and a positioning device disposed below the welding device, then aligns the front and rear sections on the positioning device along a same axis to contact the front welding surface and the rear welding surface closely at a joint, and thence rotates the front and rear sections in the same rotational direction to allow the welding device circumferentially welds the front and rear sections at the joint to integrate the front and rear sections into a bi-compositional blank. Therefore, the welding method prevents air and pores from generating inside the joint and prevents waste from being extruded out of the joint. Finally, the forming operation rolls a plurality of threads on the bi-compositional blank to form a bi-compositional screw. Thus, the processing procedures are simplified, the processing costs are reduced, and the preferable processing quality is attained.

Preferably, the welding operation heats directly without adding additional solder.

Preferably, in the welding operation, the joint where the front end and the rear end meet is circumferentially welded by the welding device to prevent waste from being extruded out of the joint after welding.

Preferably, in the preparing operation, both of the front welding surface and the rear welding surface are formed in a flat surface.

### BRIEF DESCRIPTION OF THE DRAWINGS

Fig. **1** is a block diagram showing the operations of a conventional welding method for manufacturing a bi-compositional screw in sequential order;
Fig. **2** is a schematic view in accordance with the conventional welding method;
Fig. **3** is a block diagram showing the operations of a first preferred embodiment of this invention in sequential order;
Fig. **4** is a schematic view showing the front section and the rear section; and
Fig. **5** is a schematic view in accordance with the first preferred embodiment of this invention.

### DETAILED DESCRIPTION OF THE PREFERRED EMBODIMENTS

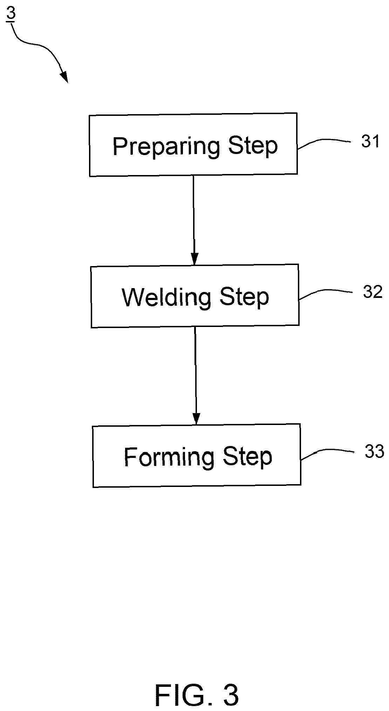

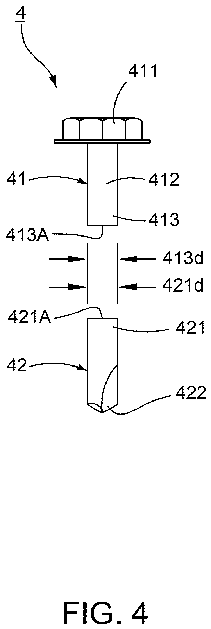

Referring to Figs. **3** to **5****,** a welding method **3** for manufacturing a bi-compositional screw **4B** of a first preferred embodiment of this invention includes a preparing operation **31,** a welding operation **32,** and a forming operation **33.** The preparing operation **31** prepares two raw blanks **4** which are provided with different materials and processes the two raw blanks **4** respectively to form a front section **41** and a rear section **42,** both of which are provided with smooth peripheral faces. The front section **41** has a head **411,** a shank **412** extending outwards from the head **411,** and a front end **413** with a front welding surface **413A** formed on the front section **41** opposite to the head **411.** The rear section **42** has a rear end **421** with a rear welding surface **421A** formed on an end of the rear section **42** and a drill end **422** formed on another end of the rear section **42** opposite to the rear end **421.** In this preferred embodiment, both of the front welding surface **413A** and the rear welding surface **421A** are formed in a flat surface. Meanwhile, an outer diameter **413d** of the front end **413** is equal to an outer diameter **421d** of the rear end **421,** thereby providing a smooth peripheral face of the bi-compositional blank **4A** thereafter and an equal circumference (not shown) from the shank **412** to the rear end **421.** Further, the front section **41** can be made of a corrosion-resisting material such as stainless steel. On the other hand, the rear section **42** can be made of a material with higher hardness such as martensite or hardened materials.

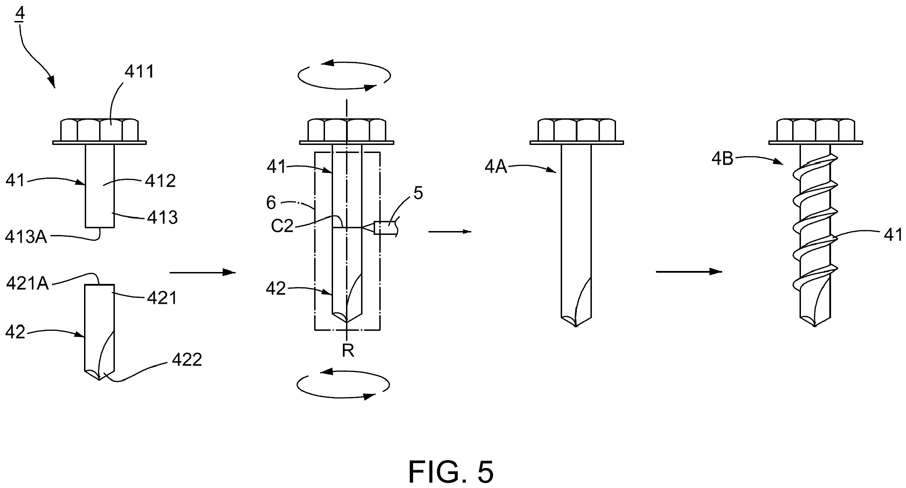

Referring to Fig. **3** and Fig. **5****,** after the preparing operation **31,** the welding operation **32** prepares a welding device **5** and a positioning device **6** disposed below the welding device **5,** then position the front section **41** and the rear section **42** on the positioning device **6** to allow the front welding surface **413A** and the rear welding surface **421A** to contact closely along an axis **R** and meet at a joint **C2,** and thence rotates the front section **41** and the rear section **42** in the same rotational direction driven by the positioning device **6** and simultaneously welds the front end **413** and the rear end **421** at the joint **C2** in a circumferential direction executed by the welding device **5** which is disposed above the joint **C2** where the front end **413** and the rear end **421** meet, thereby integrating the front section **41** and the rear section **42** to provide a bi-compositional blank **4A.** Comparing with the robbing procedure of the conventional welding operation **12,** the welding operation **32** of this invention is executed by direct heating without applying additional solder, the welding operation **32** can prevent air and pores from generating inside the joint **C2** and prevents waste from being projected out of the joint **C2** effectively. Thus, no additional trimming procedure is required in the welding method **3** before executing the forming operation **33.** After the welding operation **32,** the forming operation **33** rolls a plurality of threads **41** on the bi-compositional blank **4A** via a threading machine (not shown) to form a bi-compositional screw **4B.** The drill end **422** can be processed into a drilling tail via a tail forming machine (not shown) according to needs. Hence, a succession of the operations **31, 32, 33** including the preparing, welding and forming attains the quick and smooth manufacturing operation of the bi-compositional screw **4B,** simplifies the processing procedures effectively, reduces the processing costs, and ensures the preferable processing quality.

To sum up, the welding method of this invention includes the preparing operation, the welding operation and the forming operation. The preparing operation prepares and processes two raw blanks provided with different materials into the front section and rear section respectively. The welding operation circumferentially welds the front and rear sections which are placed in the same axis at the joint by the welding device during the rotation of the front and rear sections in the same rotational direction driven by the positioning device, thereby combining the front and rear sections into the bi-compositional blank. The forming operation forms a plurality of threads on the bi-compositional blank to produce the bi-compositional screw, thereby preventing the generation of air and pores inside the joint, avoiding causing additional waste extruded out of the joint, simplifying the processing procedures, reducing the processing costs, and ensuring the preferable processing quality.

While the embodiments of this invention are shown and described, it is understood that further variations and modifications may be made without departing from the scope of this invention.

## Claims

1. A welding method (3) for manufacturing a bi-compositional screw (4B) comprising:
a preparing operation (31) which includes preparing two raw blanks made of different materials, said two raw blanks being processed respectively to form a front section (41) and a rear section (42) each provided with a smooth peripheral face, wherein said front section (41) has a head (411), a shank (412) extending outwards from said head (411), and a front end (413) with a front welding surface (413A) formed opposite to said head (411), said rear section (42) having a rear end (421) with a rear welding surface (421A) facing said front welding surface (413A) and a drill end (422) formed opposite to said rear end (421), an outer diameter (413d) of said front end (413) being equal to an outer diameter (421d) of said rear end (421);
a welding operation (32) which includes equipping a welding device (5) and a positioning device (6) located below said welding device (5), placing said front section (41) and said rear section (42) on said positioning device (6) in position along a same axis (R) so that said front welding surface (413A) of said front end (413) and said rear welding surface (421A) of said rear end (421) are in close contact at a joint (C2), then rotating said front section (41) and said rear section (42) in a same rotational direction driven by said positioning device (6), and thence welding said front end (413) and said rear end (421) together at said joint (C2) in a circumferential direction by said welding device (5) during the rotation of said front section (41) and said rear section (42) so that said front section (41) and said rear section (42) are united to attain a bi-compositional blank (4A); and
a forming operation (33) which includes rolling a plurality of threads (41) on said bi-compositional blank (4A) to form a bi-compositional screw (4B).

2. The welding method (3) according to claim 1, wherein said welding operation (32) heats directly without adding additional solder.

3. The welding method (3) according to claim 1, wherein in said welding operation (32), said joint (C2) where said front end (413) and said rear end (421) meet is circumferentially welded by said welding device (5) to prevent waste from being extruded out of said joint (C2) after welding.

4. The welding method (3) according to claim 1, wherein in said preparing operation (31), both of said front welding surface (413A) and said rear welding surface (421A) are formed in a flat surface.
